# EUROPEAN PATENT APPLICATION

(11) **EP 4 808 066 A1**
(43) Date of publication of application: **16.09.2026**
(21) Application number: 25869655.8
(22) Date of filing: 03.04.2025
(51) Int. Cl.: H04L 41/0896

(54) **NETWORK INTERFACE CARD BANDWIDTH CONFIGURATION SYSTEM AND METHOD, DEVICE, STORAGE MEDIUM, AND PROGRAM PRODUCT**

(30) Priority: 31.10.2024 CN 202411534657
(71) Applicant: Suzhou Metabrain Intelligent Technology Co., Ltd., Suzhou, Jiangsu 215000 (CN)
(72) Inventor: GUO, Xiaoyu, Suzhou, Jiangsu 21500 (CN); WEI, Zefeng, Suzhou, Jiangsu 21500 (CN)
(74) Representative: Studio Torta S.p.A.
(86) International application number: PCT/CN2025/087072
(87) International publication number: WO 2026/091406

(57) **Abstract**

Provided are a system and method for configuring a bandwidth for a network interface card, a device, a storage medium, and a program product, which relate to the technical field of servers. The system for configuring the bandwidth for the network interface card is configured as follows: in response to a first connector being disconnected from a second connector and disconnected from a third connector, the system for configuring the bandwidth for the network interface card is adapted to a first bandwidth; in response to the first connector being connected to the second connector and disconnected from the third connector, the system for configuring the bandwidth for the network interface card is adapted to a second bandwidth; and in response to the first connector being disconnected from the second connector and connected to the third connector, the system for configuring the bandwidth for the network interface card is adapted to two first bandwidths. By implementing the system for configuring the bandwidth for the network interface card described in the embodiments of the present disclosure, a connection between the first connector and the second connector or the third connector may be flexibly adjusted, and a bandwidth may be configured for a corresponding network interface card.

## Description

### Cross-Reference to Related Application

The present disclosure claims the benefit of priority to Chinese Patent Application No. 202411534657.6, filed with the China National Intellectual Property Administration on October 31, 2024 and entitled "System and method for configuring bandwidth for network interface card, device, storage medium, and program product", which is incorporated in its entirety herein by reference.

### Technical Field

The present disclosure relates to the technical field of servers, and particularly relates to a system and method for configuring a bandwidth for a network interface card, a device, a storage medium, and a program product.

### Background

As a high-performance network interface device, an open compute project (OCP) network interface card is broadly applied to a data center having a high requirement on network performance. The open compute project network interface card supports a single first bandwidth or two first bandwidths or second bandwidths, but hardware environments where the corresponding bandwidths are configured are different. The inventors have realized that generally, when a motherboard is designed, a hardware environment design is performed only for an open compute project network interface card having a single bandwidth configuration. The fixed hardware design may not be flexibly adapted to open compute project network interface cards having different bandwidth requirements. Moreover, open compute project network interface cards having different bandwidths are different in numbers of peripheral component interconnect express (PCIe) signals required, definitions of interface pins, etc. Thus, it is difficult to achieve compatibility and adaptation of a plurality of open compute project network interface cards supporting different bandwidths on the same motherboard. As a result, during practical application, if a bandwidth configuration of an open compute project network interface card is required to be replaced, it is required to replace the motherboard or perform complex hardware transformations. This will further increase transformation cost.

### Summary

The present disclosure provides technical solutions as follows:
In a first aspect, a system for configuring a bandwidth for a network interface card is provided. The system includes:
a first processor, a second processor, a network interface card connector, a first connector, a second connector, a third connector, and an input or output expander.

The first processor is provided with a first bus port, and the first bus port is provided with at least one first low-numbered port and at least one first high-numbered port.

The second processor is provided with a second bus port, and the second bus port is provided with at least one second low-numbered port.

The at least one first low-numbered port is connected to the network interface card connector. The at least one first high-numbered port is connected to the second connector. The first connector is connected to the network interface card connector and the input or output expander. The input or output expander is connected to the first processor. The at least one second low-numbered port is connected to the third connector.

The system for configuring the bandwidth for the network interface card is configured as follows: in response to the first connector being disconnected from the second connector and disconnected from the third connector, the system for configuring the bandwidth for the network interface card is adapted to a first bandwidth;
in response to the first connector being connected to the second connector and disconnected from the third connector, the system for configuring the bandwidth for the network interface card is adapted to a second bandwidth; and
in response to the first connector being disconnected from the second connector and connected to the third connector, the system for configuring the bandwidth for the network interface card is adapted to two first bandwidths.

Further, the first connector is provided with a first address port and a first presence port. The second connector is provided with a second address port and a second presence port. The third connector is provided with a third presence port.

The first address port is connected to the input or output expander, and the first presence port is connected to the input or output expander.

Further, the system for configuring the bandwidth for the network interface card further includes a first resistor and a second resistor.

One end of the first resistor is electrically connected to the first address port, and the other end of the first resistor is connected to a first power source.

One end of the second resistor is electrically connected to the first presence port, and the other end of the second resistor is connected to the first power source.

The second address port and the second presence port are grounded.

The third presence port is grounded.

Further, the system for configuring the bandwidth for the network interface card further includes a controller.

The controller is provided with a first power supply port, a second power supply port, and a power supply indicator port.

The first power supply port, the second power supply port, and the power supply indicator port are all connected to the network interface card connector.

Further, the system for configuring the bandwidth for the network interface card further includes a first electronic fuse and a second electronic fuse.

The network interface card connector is further provided with a first power source port and a second power source port.

One end of the first electronic fuse is electrically connected to the first power source port, and the other end of the first electronic fuse is connected to a first power source.

One end of the second electronic fuse is electrically connected to the second power source port, and the other end of the second electronic fuse is connected to a second power source.

Further, the controller is further provided with a first electronic fuse enable port and a second electronic fuse enable port.

The first electronic fuse enable port is connected to the first electronic fuse and configured to control turn-on or turn-off of the first electronic fuse.

The second electronic fuse enable port is connected to the second electronic fuse and configured to control turn-on or turn-off of the second electronic fuse.

Further, the system for configuring the bandwidth for the network interface card further includes a first buffer, a second buffer, and an AND gate.

The first buffer is connected to the controller and the network interface card connector.

The second buffer is connected to the network interface card connector and an input end of the AND gate, and an output end of the AND gate is electrically connected to the controller.

Further, the controller is further provided with a first virtual address port and a second virtual address port.

The first virtual address port is connected to the first processor.

The second virtual address port is connected to the second processor.

Further, the controller is further provided with a hot plug signal port, a first indicator port, and a second indicator port.

The system for configuring the bandwidth for the network interface card further includes a hot plug trigger, a first indicator light, and a second indicator light.

The hot plug trigger is electrically connected to the hot plug signal port.

The first indicator light is electrically connected to the first indicator port.

The second indicator light is electrically connected to the second indicator port.

Further, the network interface card connector is further provided with at least one bandwidth allocation port.

The at least one bandwidth allocation port is grounded.

Further, the system for configuring the bandwidth for the network interface card further includes a fourth connector.

The second processor is further provided with at least one second high-numbered port.

The at least one second high-numbered port is connected to the fourth connector.

In a second aspect, a method for configuring a bandwidth for a network interface card is provided. The method is applied to the system for configuring the bandwidth for the network interface card described in the first aspect and includes:
acquiring a first signal and a second signal in response to a first connector completing a connection setting, where the first signal and the second signal are configured to indicate connection status of the first connector;
determining the connection status of the first connector according to the first signal and the second signal; and
configuring, according to the connection status of the first connector, an adaptive bandwidth of the system for configuring the bandwidth for the network interface card.

Further, the connection status includes status as follows: the first connector is disconnected from a second connector and disconnected from a third connector, or the first connector is connected to the second connector and disconnected from the third connector, or the first connector is disconnected from the second connector and connected to the third connector.

The configuring, according to the connection status of the first connector, the adaptive bandwidth of the system for configuring the bandwidth for the network interface card includes:
configuring, in response to the first connector being disconnected from the second connector and disconnected from the third connector, the system for configuring the bandwidth for the network interface card to be adapted to a first bandwidth;
configuring, in response to the first connector being connected to the second connector and disconnected from the third connector, the system for configuring the bandwidth for the network interface card to be adapted to a second bandwidth; and
configuring, in response to the first connector being disconnected from the second connector and connected to the third connector, the system for configuring the bandwidth for the network interface card to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
controlling, in response to detecting that the network interface card is present, a first power source and a second power source to be powered on; and
configuring, in response to receiving the hot plug signal, a bandwidth corresponding to the network interface card according to the first signal and the second signal.

Further, after the configuring the bandwidth corresponding to the network interface card according to the first signal and the second signal, the method further includes:
enabling the network interface card, and controlling a second indicator light to blink until the network interface card is completely enabled; and
controlling the second indicator light to be steady on to indicate that the network interface card normally functions.

Further, the method for configuring the bandwidth for the network interface card further includes:
controlling, in response to the system for configuring the bandwidth for the network interface card being connected to the network interface card and acquiring a hot plug signal, the network interface card to be powered off; and
removing, in response to the network interface card completely powered off, the network interface card, and controlling a first power source and a second power source to be powered off.

Further, the controlling the network interface card to be powered off includes:
controlling a first power supply port and a second power supply port to be powered off;
controlling a second indicator light to blink until the first power supply port and the second power supply port are completely powered off; and
turning off, in response to the first power supply port and the second power supply port completely powered off, the second indicator light, to indicate that the network interface card is removed.

In a third aspect, an apparatus for configuring a bandwidth for a network interface card is provided. The apparatus includes:
a signal acquiring component configured to acquire a first signal and a second signal in response to a first connector completing a connection setting, where the first signal and the second signal are configured to indicate connection status of the first connector;
a status acquiring component configured to determine the connection status of the first connector according to the first signal and the second signal; and
a bandwidth configuring component configured to configure, according to the connection status of the first connector, an adaptive bandwidth of the system for configuring the bandwidth for the network interface card.

In a fourth aspect, a computer device is provided. The computer device includes a memory, a processor, and a network interface card bandwidth configuration program stored in the memory and capable of being run on the processor. The processor, when executing the network interface card bandwidth configuration program, implements the method for configuring the bandwidth for the network interface card described in the second aspect.

In a fifth aspect, a computer-readable storage medium is provided. The computer-readable storage medium stores a network interface card bandwidth configuration program. The network interface card bandwidth configuration program, when executed by a processor, implements the method for configuring the bandwidth for the network interface card described in the second aspect.

In a sixth aspect, a computer-readable instruction product is provided. The computer-readable instruction product includes computer-readable instructions. The computer-readable instructions, when executed by a processor, implement the method for configuring the bandwidth for the network interface card described in the second aspect.

### Brief Description of the Drawings

In order to describe technical solutions in the examples of the present disclosure more clearly, the accompanying drawings required to be used in the descriptions of the examples are briefly introduced below. Apparently, the accompanying drawings in the following descriptions show merely some examples of the present disclosure. Those of ordinary skill in the art can derive other accompanying drawings according to these accompanying drawings without making creative efforts.
Fig. 1 is a schematic diagram of a system for configuring a bandwidth for a network interface card according to one or more embodiments of the present disclosure;
Fig. 2 is a schematic diagram of a method for configuring a bandwidth for a network interface card according to one or more embodiments of the present disclosure;
Fig. 3 is a schematic diagram of an apparatus for configuring a bandwidth for a network interface card according to one or more embodiments of the present disclosure; and
Fig. 4 is a schematic diagram of a computer device according to one or more embodiments of the present disclosure.

### Detailed Description of the Embodiments

To make the objectives, technical solutions and advantages of the present disclosure clearer, the technical solutions in the embodiments of the present disclosure are clearly and completely described below in combination with the accompanying drawings in the embodiments of the present disclosure. Apparently, the described examples are merely some examples rather than all examples of the present disclosure. All other examples derived by those of ordinary skill in the art based on the examples of the present disclosure without making creative efforts fall within the scope of protection of the present disclosure.

Unless otherwise defined, technical terms or scientific terms used in the present disclosure should have the ordinary meanings understood by those of ordinary skill in the art to which the present disclosure belongs. "First", "second", and other similar words used in the present disclosure do not indicate any order, quantity or importance, but are merely configured to distinguish between different components. Similarly, "one", "a/an", or "the", and other similar words do not denote a limitation on quantity, but denote the presence of at least one. The numbers in the accompanying drawings of the described merely denote the distinctions between various functional components or modules, and do not denote the logical relationships between the components or modules. "Contain", "include", and other similar words mean that an element or object appearing before the word includes elements or objects listed after the word and their equivalents, without excluding other elements or objects. "Connection", "connected", and other similar words are not limited to physical or mechanical connections, but can include electrical connections, whether direct or indirect. Terms "up", "down", "left", "right", etc. are merely used to denote relative position relationships. When the absolute position of a described object changes, the relative position relationship may change accordingly.

Hereinafter, various examples according to the present disclosure are described in detail with reference to the accompanying drawings. It should be noted that in the accompanying drawings, the same reference numerals are given to components having substantially the same or similar structures and functions, and their repeated descriptions are omitted.

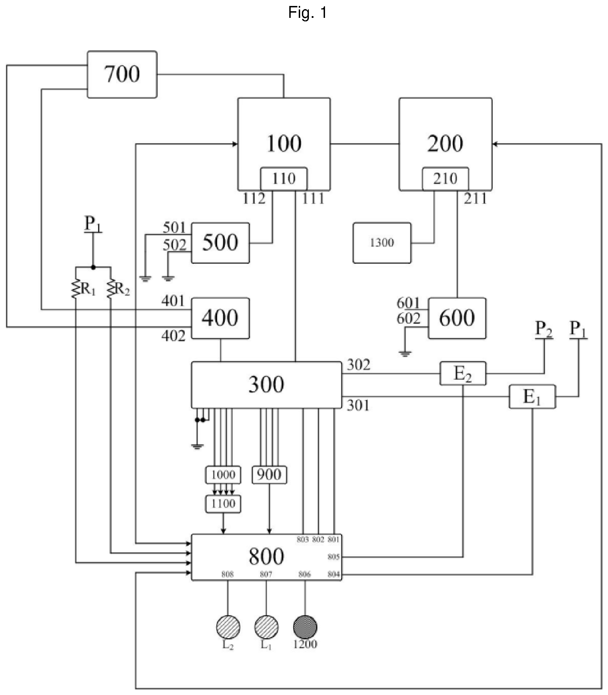

To solve the problem of inflexible configuration of a bandwidth for an open compute project network interface card, the present disclosure provides embodiments as follows:
In some embodiments of the present disclosure, as shown in Fig. 1, in a first aspect, a system for configuring a bandwidth for a network interface card is provided. The system includes:
a first processor 100, a second processor 200, a network interface card connector 300, a first connector 400, a second connector 500, a third connector 600, and an input or output expander 700.

The first processor 100 is provided with a first bus port 110, and the first bus port 110 is provided with at least one first low-numbered port 111 and at least one first high-numbered port 112.

The second processor 200 is provided with a second bus port 210, and the second bus port 210 is provided with at least one second low-numbered port 211.

The at least one first low-numbered port 111 is connected to the network interface card connector 300. The at least one first high-numbered port 112 is connected to the second connector 500. The first connector 400 is connected to the network interface card connector 300 and the input or output expander 700. The input or output expander is connected to the first processor 100. The at least one second low-numbered port 211 is connected to the third connector 600.

The system for configuring the bandwidth for the network interface card is configured as follows: in response to the first connector 400 being disconnected from the second connector 500 and disconnected from the third connector 600, the system for configuring the bandwidth for the network interface card is adapted to a first bandwidth;
in response to the first connector 400 being connected to the second connector 500 and disconnected from the third connector 600, the system for configuring the bandwidth for the network interface card is adapted to a second bandwidth; and
in response to the first connector 400 being disconnected from the second connector 500 and connected to the third connector 600, the system for configuring the bandwidth for the network interface card is adapted to two first bandwidths.

The technical solutions provided in the embodiments of the present disclosure have beneficial effects as follows: by implementing the system for configuring the bandwidth for the network interface card described in the embodiments of the present disclosure, a connection between the first connector and the second connector or the third connector may be flexibly adjusted, and a bandwidth may be configured for a corresponding network interface card.

In some embodiments of the present disclosure, the first bandwidth is an x8 bandwidth, the second bandwidth is an x16 bandwidth, and the two first bandwidths are dual x8 bandwidths.

The first processor and the second processor are central processing units. The network interface card connector is an open compute project (OCP) network interface card connector. The first connector, the second connector, the third connector, and the fourth connector are mini cool edge IO (MCIO) connectors.

In some embodiments of the present disclosure, the bus ports are peripheral component interconnect express (PCIe) bus ports. The low-numbered ports are ports with PCIe port numbers [0:7], and the high-numbered ports are ports with PCIe port numbers [8:15].

Generally, the first connector and the second connector or the third connector are interconnected by a high-speed cable.

Further, the first connector 400 is provided with a first address port 401 and a first presence port 402. The second connector 500 is provided with a second address port 501 and a second presence port 502. The third connector 600 is provided with a third presence port 602.

The first address port 401 is connected to the input or output expander 700, and the first presence port 402 is connected to the input or output expander 700.

A level of the first address port and a level of the first presence port are configured to indicate connection status of the first connector and the second connector or the third connector.

Further, the system for configuring the bandwidth for the network interface card further includes a first resistor R₁ and a second resistor R₂.

One end of the first resistor R₁ is electrically connected to the first address port 401, and the other end of the first resistor R₁ is connected to a first power source P₁.

One end of the second resistor R₂ is electrically connected to the first presence port 402, and the other end of the second resistor R₂ is connected to the first power source P₁.

The second address port 501 and the second presence port 502 are grounded.

The third presence port 602 is grounded, and the third address port 601 is floating.

After the first connector is connected to the second connector by a cable, the first address port is correspondingly connected to the second address port, and the first presence port is correspondingly connected to the second presence port. After the first connector is connected to the third connector by a cable, the first address port is correspondingly connected to the third address port, and the first presence port is correspondingly connected to the third presence port.

The first address port is pulled up by the first resistor to be connected to the first power source. The first presence port is pulled up by the second resistor to be connected to the first power source.

After the first address port is connected to the second address port or the third address port by a cable, level status of the first address port is determined. After the first presence port is connected to the second presence port or the third presence port by a cable, it is determined that the first presence port is at a high level. When the first address port is not connected to the second address port, the first address port is at a high level.

Accordingly, after the first presence port is connected to the third presence port by a cable, it is determined that the first presence port is at a low level. When the first address port is not connected to the second address port, the first address port is at a high level.

Connection status of the first connector, the second connector, and the third connector may be determined according to level status of the first address port.

Further, the system for configuring the bandwidth for the network interface card further includes a controller 800.

The controller 800 is provided with a first power supply port 801, a second power supply port 802, and a power supply indicator port 803.

The first power supply port 801, the second power supply port 802, and the power supply indicator port 803 are all connected to the network interface card connector 300.

Further, the system for configuring the bandwidth for the network interface card further includes a first electronic fuse E₁ and a second electronic fuse E₂.

The network interface card connector 300 is further provided with a first power source port 301 and a second power source port 302.

One end of the first electronic fuse E₁ is electrically connected to the first power source port 301, and the other end of the first electronic fuse E₁ is connected to a first power source P₁.

One end of the second electronic fuse E₂ is electrically connected to the second power source port 302, and the other end of the second electronic fuse E₂ is connected to a second power source P₂.

The controller has at least one of functions as follows: controlling power-on status of a power source of a network interface card connector, resetting a PCIe network interface card, monitoring presence status of the network interface card, and implementing hot plug on the network interface card.

In some embodiments of the present disclosure, the controller is a microcontroller unit (MCU).

In some embodiments of the present disclosure, the controller is a complex programmable logic device (CPLD).

Further, the controller 800 is further provided with a first electronic fuse enable port 804 and a second electronic fuse enable port 805.

The first electronic fuse enable port 804 is connected to the first electronic fuse E₁ and configured to control turn-on or turn-off of the first electronic fuse E₁.

The second electronic fuse enable port 805 is connected to the second electronic fuse E₂ and configured to control turn-on or turn-off of the second electronic fuse E₂.

Further, the system further includes a first buffer 900, a second buffer 1000, and an AND gate 1100.

The first buffer 900 is connected to the controller 800 and the network interface card connector 300.

The second buffer 1000 is connected to the network interface card connector 300 and an input end of the AND gate 1100, and an output end of the AND gate 1100 is electrically connected to the controller 800.

Further, the controller 800 is further provided with a first virtual address port VPP₁ and a second virtual address port VPP₂.

The first virtual address port VPP₁ is connected to the first processor 100.

The second virtual address port VPP₂ is connected to the second processor 200.

Further, the controller 800 is further provided with a hot plug signal port 806, a first indicator port 807, and a second indicator port 808.

The system for configuring the bandwidth for the network interface card further includes a hot plug trigger 1200, a first indicator light L₁, and a second indicator light L₂.

The hot plug trigger 1200 is electrically connected to the hot plug signal port 806.

The first indicator light L₁ is electrically connected to the first indicator port 807.

The second indicator light L₂ is electrically connected to the second indicator port 808.

The hot plug trigger is configured to generate a ready signal for performing hot plug or hot unplug on the network interface card. In some embodiments of the present disclosure, the hot plug trigger may be a key or a touch key.

Further, the network interface card connector 300 is further provided with at least one bandwidth allocation port 303.

The at least one bandwidth allocation port 303 is grounded.

Further, the system for configuring the bandwidth for the network interface card further includes a fourth connector 1300.

The second processor 200 is further provided with at least one second high-numbered port 212.

The at least one second high-numbered port 212 is connected to the fourth connector 1300.

Controller and network interface card connector line: the controller controls turn-on and turn-off of the second fuse and the first fuse through signals FM_P12V_OCP_EN and FM_P3V3_OCP_EN, and then controls power-on status of P12V_OCP_STBY and P3V3_OCP_STBY of the connector. The controller is connected to the network interface card connector through signals MAIN_PWR_EN and AUX_PWR_EN to control power-on of the related power source in the network interface card, and is connected to the network interface card connector through a signal NIC_PWR_GOOD to monitor power-on of the network interface card. The controller is connected to a Buffer through a signal FM_OCP_PERST_N, and transfers a signal FM_PERST0/1/2/3_N to the network interface card connector to control reset of the PCIe of the network interface card. Four presence signals FM_PRSNTB0/1/2/3_N of the network interface card connector are isolated by the Buffer, pass through the AND gate, and are connected to the controller through the signal FM_OCP_PRSNT_N to monitor whether the network interface card is present. Three bandwidth allocation pins FM_BIF0/1/2 of the network interface card connector are directly grounded, such that the network interface card is in a default bandwidth allocation configuration.

Network interface card hot plug part line: the first processor and the second processor are connected to the controller by a virtual pin port (VPP) bus to perform interaction of related hot plug information. The controller is connected to a physical hot plug trigger through a signal FM_OCP_ATTEN_HP_BTN_N to monitor whether a user is required to perform notified hot plug on the network interface card. The controller controls status of the second indicator light through a signal FM_OCP_PWR_LED_N to notify a user of current power-on status of the network interface card. The controller controls status of the first indicator light through a signal FM_OCP_ATTEN_LED_N to notify a user whether current status of the network interface card is abnormal. A central processing unit (CPU) expands general-purpose input/output by the input or output expander, and monitors high and low level status of FM_OCP_CABLE_PRSNT_N and FM_OCP_CPU_ADDRESS_N by the general-purpose input/output (GPIO) to implement bandwidth allocation. A basic input/output system (BIOS) reads level information of the input or output expander by a bus HOST_SMBUS at a stage of power-on self-test (POST), and complete the bandwidth allocation based on level status. A method for configuring a bandwidth is given in Table 1. The GPIO is expanded by the input or output expander, and high and low level status of signals FM_OCP_CABLE_PRSNT_N and FM_OCP_CPU_ADDRESS_N are monitored by the GPIO to implement bandwidth allocation. A basic input/output system (BIOS) reads level information of the input or output expander by a bus HOST_SMBUS at a stage of power-on self-test (POST), and complete the bandwidth allocation based on level status. Reference is made to the table for bandwidth allocation status.

**Table 1 Level status of the first address port and level status of the first presence port indicate distribution of bandwidths.**

| FM_OCP_C ABLE_PRSN T_N | FM_OCP_C PU_ADDRE SS_N | First processor PCIe [0:7] | First processor PCIe [8:16] | Second processor PCIe [0:7] | Second processor PCIe [8:16] |
|---|---|---|---|---|---|
| 1 | 1 | X8 | NA | NA | NA |
| 0 | 0 | X16 | | NA | NA |
| 0 | 1 | X8 | NA | X8 | NA |

Front x8 [0:7] of a group of PCIe ports of the first processor are connected to front x8 of the network interface card connector. No cable connection is required for the first connector. Moreover, FM_OCP_CABLE_PRSNT_N and FM_OCP_CPU_ADDRESS_N are kept at high levels. The BIOS configures PCIe [0:7] of the first processor as x8 at the stage of POST with reference to Table 1. The controller detects, through a signal FM_OCP_PRSNT_N, that the network interface card is present, then enables signals FM_P12V_OCP_EN and FM_P3V3_OCP_EN, controls P12V_OCP_STBY and P3V3_OCP_STBY to be powered on, and pushes, according to a timing requirement, signals AUX_PWR_EN and MAIN_PWR_EN to control internal power source status of the network interface card to perform enabling. After the network interface card is enabled, the controller is notified through a signal NIC_PWR_GOOD. The controller releases a signal FM_OCP_PERST_N according to a timing requirement of a server, to control the OCP network interface card to enter normal working status. A motherboard design may be adapted to a network interface card having an x8 bandwidth. The second connector, the third connector, and the fourth connector may be led out by cables to support other PCIe devices.

The first connector is connected to the second connector by a cable. At this time, front x8 [0:7] of the first processor are connected to front x8 of the network interface card connector, and rear x8 [8:15] are connected to rear x8 of the network interface card connector by an MCIO connector and cables. The second address port and the second presence port of the second connector are connected to the first address port and the first presence port of the first connector respectively. Moreover, FM_OCP_CABLE_PRSNT_N and FM_OCP_CPU_ADDRESS_N are pulled down. The BIOS configures PCIe [0:15] as x16 at the stage of POST with reference to Table 1. After detecting that the network interface card is present, the controller enables the network interface card by pushing a related timing signal. A motherboard design may be adapted to a network interface card having an x16 bandwidth. The third connector and the fourth connector may be led out by cables to support other PCIe devices.

The first connector is connected to the third connector by a cable. At this time, front x8 [0:7] of the first processor are connected to front x8 of the network interface card connector. Front x8 [0:7] of the second processor are connected to rear x8 of the network interface card connector by an MCIO connector and cables. The third address port and the third presence port of the third connector are connected to the first address port and the first presence port of the first connector respectively. Moreover, FM_OCP_CABLE_PRSNT_N is pulled down, and FM_OCP_CPU_ADDRESS_N is kept at a high level. The BIOS configure PCIe [0:7] of the first processor as x8 and PCIe [0:7] of the second processor as x8 at the stage of POST with reference to Table 1. After detecting that the network interface card is present, the controller enables the network interface card by pushing a related timing signal. A motherboard design may be adapted to a network interface card having dual x8 bandwidths. The second connector and the third connector may be led out by cables to support other PCIe devices.

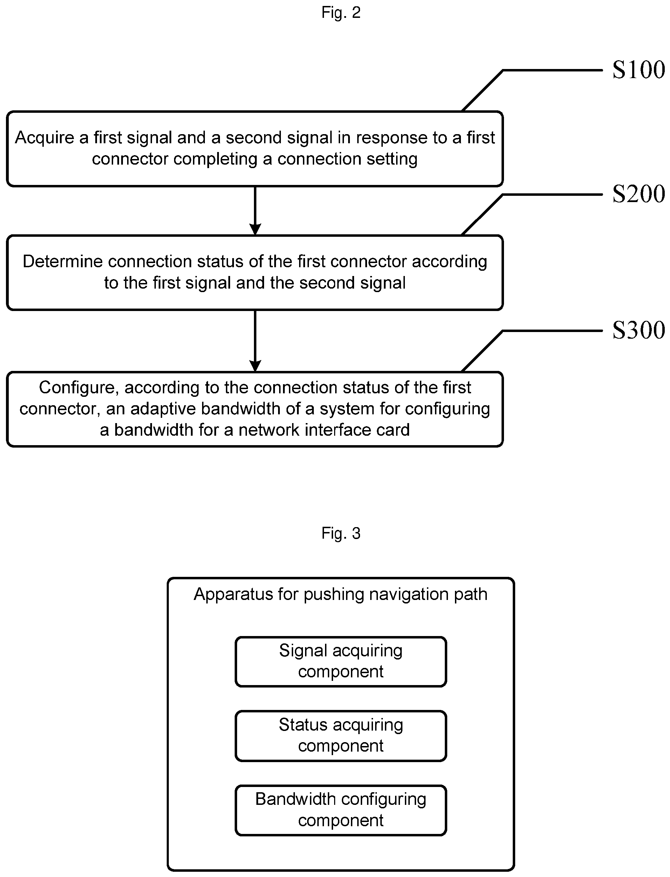

In some embodiments of the present disclosure, a method for configuring a bandwidth for a network interface card is provided. As shown in Fig. 2, the method is applied to the system for configuring a bandwidth for a network interface card described in the first aspect and includes:
S100: a first signal and a second signal are acquired in response to a first connector completing a connection setting, where the first signal and the second signal are configured to indicate connection status of the first connector.
S200: connection status of the first connector is determined according to the first signal and the second signal.
S300: an adaptive bandwidth of the system for configuring the bandwidth for the network interface card is configured according to the connection status of the first connector.

The first signal is an address signal, and the second signal is a presence signal.

Further, the connection status includes status as follows: the first connector 400 is disconnected from a second connector 500 and disconnected from a third connector 600, or the first connector 400 is connected to the second connector 500 and disconnected from the third connector 600, or the first connector 400 is disconnected from the second connector 500 and connected to the third connector 600.

S300 that the adaptive bandwidth of the system for configuring the bandwidth for the network interface card is configured according to the connection status of the first connector includes:
in response to the first connector 400 being disconnected from the second connector 500 and disconnected from the third connector 600, the system for configuring the bandwidth for the network interface card is configured to be adapted to a first bandwidth;
in response to the first connector 400 being connected to the second connector 500 and disconnected from the third connector 600, the system for configuring the bandwidth for the network interface card is configured to be adapted to a second bandwidth; and
in response to the first connector 400 being disconnected from the second connector 500 and connected to the third connector 600, the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that the bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed. Notified hot plug is supported in single x8 bandwidth status, dual x8 bandwidth status, and x16 bandwidth status. The first processor and the controller transmit hot plug information by a VPP bus. The second processor and the controller transmit hot plug information by the VPP bus. Since the VPP bus includes hot plug related information of all PCIe devices of the CPU, VPP addresses in different bandwidth status are required to be set, to ensure that hot plug information in normal bandwidth status is correctly transmitted. The CPU and the controller may recognize currently supported bandwidth status of a network interface card through level status of FM_OCP_CABLE_PRSNT_N and FM_OCP_CPU_ADDRESS_N. The CPU and the controller set a VPP address for transferring hot plug information through Table 2.

**Table 2 Allocation table of VPP addresses for different bandwidths**

| Supported bandwidth | PCIe Port | VPP Address |
|---|---|---|
| X8 | First processor PCIe [0:7] | 0x46 |
| X16 | First processor PCIe [0:15] | 0x40 |
| X8X8 | First processor PCIe [0:7] | 0x46 |
| | Second processor PCIe [0:7] | 0x46 |

If a user wants to perform notified hot unplug on a network interface card device, the user is required to press a hot plug trigger. After the controller detects that the hot plug trigger is pressed through a signal FM_OCP_ATTEN_HP_BTN_N, a hot plug request corresponding to a VPP address is transmitted to a CPU by a VPP bus according to currently supported bandwidth status. After receiving hot plug information corresponding to the address, the CPU may know that the corresponding network interface card device applies for a hot plug operation, and related unloading and closing actions of the device are performed. After unloading is completed, the controller is notified, by the VPP bus, of power-off of the network interface card. In a dual X8 bandwidth configuration, the controller monitors power-off notifications of the first processor and the second processor. Only after the controller receives power-off notifications of the two CPUs, a subsequent power-off operation is performed. The controller controls signals FM_OCP_PERST_N\MAIN_PWR_EN\AUX_PWR_EN according to a time sequence, to control internal power-off of the network interface card. During the power-off, the CPU notifies, by the VPP bus, the controller to keep pulling up and pulling down a signal FM_OCP_PWR_LED_N. Thus, the second indicator light blinks until the power-off operation is completed, and the second indicator light is steady off. At this time, the user may unplug the network interface card. When the controller detects unplug through a signal FM_OCP_PRSNT_N, a signal FM_P12V_OCP_EN\FM_P3V3_OCP_EN is pulled down to control P12V_OCP_STBY and P3V3_OCP_STBY to be powered off. If any fault occurs on the hot plug, such as failure or timeout of unloading of the network interface card, the CPU notifies, by the VPP bus, the controller of pull-down of a signal FM_OCP_ATTEN_LED_N to light up the first indicator light, to notify the user that the hot plug process is abnormal.

If the user wants to perform notified hot plug on the network interface card device, the user is required to plug the network interface card into the network interface card connector first. At this time, the controller detects that the network interface card is present through the signal FM_OCP_PRSNT_N, and the signal FM_P12V_OCP_EN\FM_P3V3_OCP_EN is pulled up to control P12V_OCP_STBY and P3V3_OCP_STBY to be powered on. Then, the user presses the hot plug trigger to notify the controller of performing hot plug on the network interface card device. The controller sets the corresponding VPP address according to currently supported bandwidth status. A hot plug request is transmitted to the CPU by the VPP bus through the corresponding VPP address. The CPU performs corresponding hot plug preparation. The controller is notified, by the VPP bus, to power-on of the network interface card after the preparation is completed. In a dual X8 bandwidth configuration, the controller monitors power-on notifications of the first processor and the second processor respectively. Only after the controller receives power-on notifications of the two CPUs, subsequent power-on operations are performed. The controller controls the signal FM_OCP_PERST_N\MAIN_PWR_EN\AUX_PWR_EN according to a timing requirement, to enable the network interface card device. During this period, the CPU notifies, by a VPP bus, the controller to keep pulling up and pulling down the signal FM_OCP_PWR_LED_N. Thus, the second indicator light blinks until the network interface card is enabled, and the second indicator light is steady on. If any fault occurs on the hot plug, such as failure or timeout of unloading of the network interface card, the CPU notifies, by the VPP bus, the controller of pull-down of the signal FM_OCP_ATTEN_LED_N to light up the first indicator light, to notify the user that the hot plug process is abnormal.

It should be understood that although all steps in the flowchart of Fig. 1 are shown in sequence as indicated by arrows, these steps are not certainly performed in sequence in orders indicated by the arrows. Unless explicitly stated herein, these steps are not strictly limited to the order in which they are performed, and may be performed in other orders. Moreover, at least some steps in Fig. 1 may include a plurality of sub-steps or a plurality of stages. These sub-steps or stages are not certainly performed at the same time, but may be performed at different time. These sub-steps or stages are not certainly performed in sequence, but may be performed in turn or alternatively with other steps or at least some sub-steps or stages of other steps.

In some embodiments of the present disclosure, as shown in Fig. 3, an apparatus for configuring a bandwidth for a network interface card includes:
a signal acquiring component configured to acquire a first signal and a second signal in response to a first connector completing a connection setting, where the first signal and the second signal are configured to indicate connection status of the first connector;
a status acquiring component configured to determine the connection status of the first connector according to the first signal and the second signal; and
a bandwidth configuring component configured to configure, according to the connection status of the first connector, an adaptive bandwidth of the system for configuring the bandwidth for the network interface card.

For a specific definition of the apparatus for configuring a bandwidth for a network interface card described above, reference may be made to the definition of the method for configuring a bandwidth for a network interface card described above. Details are omitted herein. All or some of the above components of the apparatus for configuring a bandwidth for a network interface card may be implemented by software, hardware, or their combinations. The above components may be embedded in or independent of a processor of a computer device in a form of hardware, or may be stored in a memory of a computer device in a form of software such that the processor may invoke and perform operations corresponding to the above components.

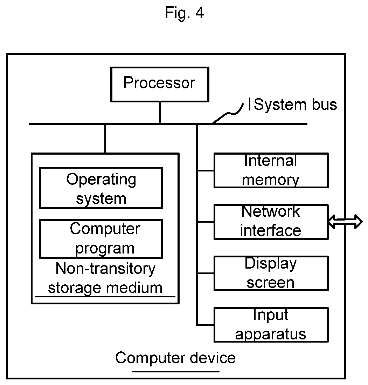

In some embodiments of the present disclosure, as shown in Fig. 4, a computer device includes a memory, a processor, and a network interface card bandwidth configuration program stored in the memory and capable of being run on the processor. The processor, when executing the network interface card bandwidth configuration program, implements the method for configuring a bandwidth for a network interface card described in the second aspect.

In some embodiments of the present disclosure, S100: a first signal and a second signal are acquired in response to a first connector completing a connection setting, where the first signal and the second signal are configured to indicate connection status of the first connector.

S200: connection status of the first connector is determined according to the first signal and the second signal.

S300: an adaptive bandwidth of the system for configuring a bandwidth for a network interface card is configured according to the connection status of the first connector.

The first signal is an address signal, and the second signal is a presence signal.

Further, the connection status includes status as follows: the first connector 400 is disconnected from a second connector 500 and disconnected from a third connector 600, or the first connector 400 is connected to the second connector 500 and disconnected from the third connector 600, or the first connector 400 is disconnected from the second connector 500 and connected to the third connector 600.

S300 that an adaptive bandwidth of the system for configuring a bandwidth for a network interface card is configured according to the connection status of the first connector includes:
in response to the first connector 400 being disconnected from the second connector 500 and disconnected from the third connector 600, the system for configuring the bandwidth for the network interface card is configured to be adapted to a first bandwidth;
in response to the first connector 400 being connected to the second connector 500 and disconnected from the third connector 600, the system for configuring the bandwidth for the network interface card is configured to be adapted to a second bandwidth; and
in response to the first connector 400 being disconnected from the second connector 500 and connected to the third connector 600, the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a non-transitory computer-readable storage medium stores a network interface card bandwidth configuration program. The network interface card bandwidth configuration program, when executed by a processor, implements the method for configuring the bandwidth for the network interface card described above. Specifically,
S100: a first signal and a second signal are acquired in response to a first connector completing a connection setting, where the first signal and the second signal are configured to indicate connection status of the first connector.
S200: connection status of the first connector is determined according to the first signal and the second signal.
S300: an adaptive bandwidth of the system for configuring the bandwidth for the network interface card is configured according to the connection status of the first connector.

The first signal is an address signal, and the second signal is a presence signal.

Further, the connection status includes status as follows: the first connector 400 is disconnected from a second connector 500 and disconnected from a third connector 600, or the first connector 400 is connected to the second connector 500 and disconnected from the third connector 600, or the first connector 400 is disconnected from the second connector 500 and connected to the third connector 600.

S300 that an adaptive bandwidth of the system for configuring the bandwidth for the network interface card is configured according to the connection status of the first connector includes:
in response to the first connector 400 being disconnected from the second connector 500 and disconnected from the third connector 600, the system for configuring the bandwidth for the network interface card is configured to be adapted to a first bandwidth;
in response to the first connector 400 being connected to the second connector 500 and disconnected from the third connector 600, the system for configuring the bandwidth for the network interface card is configured to be adapted to a second bandwidth; and
in response to the first connector 400 being disconnected from the second connector 500 and connected to the third connector 600, the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a non-transitory computer-readable storage medium stores a network interface card bandwidth configuration program. The network interface card bandwidth configuration program, when executed by a processor, implements the method for configuring the bandwidth for the network interface card described above.

Specifically, the first connector 400 is disconnected from the second connector 500 and connected to the third connector 600, and the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a computer-readable instruction product includes computer-readable instructions. The computer-readable instructions, when executed by a processor, implement the method for configuring a bandwidth for a network interface card described in the second aspect. The method specifically includes: the first connector 400 is disconnected from the second connector 500 and connected to the third connector 600, and the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a computer-readable instruction product is provided and includes computer-readable instructions. The computer-readable instructions, when executed by a processor, implement the method for configuring the bandwidth for the network interface card described in the second aspect. The method specifically includes:
S100: a first signal and a second signal are acquired in response to a first connector completing a connection setting, where the first signal and the second signal are configured to indicate connection status of the first connector.
S200: connection status of the first connector is determined according to the first signal and the second signal.
S300: an adaptive bandwidth of the system for configuring the bandwidth for the network interface card is configured according to the connection status of the first connector.

The first signal is an address signal, and the second signal is a presence signal.

Further, the connection status includes status as follows: the first connector 400 is disconnected from a second connector 500 and disconnected from a third connector 600, or the first connector 400 is connected to the second connector 500 and disconnected from the third connector 600, or the first connector 400 is disconnected from the second connector 500 and connected to the third connector 600.

S300 that an adaptive bandwidth of the system for configuring the bandwidth for the network interface card is configured according to the connection status of the first connector includes:
in response to the first connector 400 being disconnected from the second connector 500 and disconnected from the third connector 600, the system for configuring the bandwidth for the network interface card is configured to be adapted to a first bandwidth;
in response to the first connector 400 being connected to the second connector 500 and disconnected from the third connector 600, the system for configuring the bandwidth for the network interface card is configured to be adapted to a second bandwidth; and
in response to the first connector 400 being disconnected from the second connector 500 and connected to the third connector 600, the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a computer-readable storage medium stores a network interface card bandwidth configuration program. The network interface card bandwidth configuration program, when executed by a processor, implements the method for configuring the bandwidth for the network interface card described above.

Specifically, the first connector 400 is disconnected from the second connector 500 and connected to the third connector 600, and the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

In some embodiments of the present disclosure, a computer-readable instruction product includes computer-readable instructions. The computer-readable instructions, when executed by a processor, implement the method for configuring the bandwidth for the network interface card described in the second aspect. The method specifically includes: the first connector 400 is disconnected from the second connector 500 and connected to the third connector 600, and the system for configuring the bandwidth for the network interface card is configured to be adapted to two first bandwidths.

Further, the system for configuring the bandwidth for the network interface card further includes a hot plug trigger, and the hot plug trigger is triggered to generate a hot plug signal. The method for configuring the bandwidth for the network interface card further includes:
in response to detecting that the network interface card is present, a first power source and a second power source are controlled to be powered on; and
in response to receiving the hot plug signal, a bandwidth corresponding to the network interface card is configured according to the first signal and the second signal.

Further, after the step that a bandwidth corresponding to the network interface card is configured according to the first signal and the second signal, the method further includes:
the network interface card is enabled, and a second indicator light is controlled to blink until the network interface card is completely enabled; and
the second indicator light is controlled to be steady on to indicate that the network interface card normally functions.

Further, the method for configuring the bandwidth for the network interface card further includes:
in response to the system for configuring the bandwidth for the network interface card being connected to the network interface card and acquiring a hot plug signal, the network interface card is controlled to be powered off; and
in response to the network interface card completely powered off, the network interface card is removed, and a first power source and a second power source are controlled to be powered off.

Further, the step that the network interface card is controlled to be powered off includes:
a first power supply port and a second power supply port are controlled to be powered off;
a second indicator light is controlled to blink until the first power supply port and the second power supply port are completely powered off; and
in response to the first power supply port and the second power supply port completely powered off, the second indicator light is turned off, to indicate that the network interface card is removed.

The technical solutions provided in the embodiments of the present disclosure have beneficial effects as follows: by implementing the system for configuring a bandwidth for a network interface card described in the embodiments of the present disclosure, a connection between the first connector and the second connector or the third connector may be flexibly adjusted, and a bandwidth may be configured for a corresponding network interface card. By implementing the method for configuring a bandwidth for a network interface card based on the system for configuring a bandwidth for a network interface card, a bandwidth adapted to the network interface card is configured. A network interface card hot plug mechanism is provided to implement hot plug of the network interface card. Connection status of the network interface card is indicated.

All of the above optional technical solutions may be freely combined to form optional embodiments of the present disclosure, and are not repeated herein.

Particularly, according to the embodiments of the present disclosure, the processes described above with reference to flowcharts may be implemented as computer software programs. For example, the embodiments of the present disclosure include a computer-readable instruction product. The computer-readable instruction product includes computer-readable instructions loaded on a computer-readable medium. The computer-readable instructions include program codes for performing the methods illustrated in the flowcharts. In such embodiments, the computer-readable instructions may be downloaded and mounted from a network by a communication apparatus, or mounted from a memory, or mounted from a read-only memory (ROM). The computer-readable instructions, when executed by an external processor, perform the functions defined in the methods in the embodiments of the present disclosure.

It should be noted that the computer-readable medium in the embodiments of the present disclosure may be a computer-readable signal medium or a computer-readable storage medium, or any combinations of the foregoing. The computer-readable storage medium may be but is not limited to an electrical, magnetic, optical, electromagnetic, infrared, or semiconductor system, apparatus, or device, or any combinations of the foregoing. More particular instances of the computer-readable storage medium can include but are not limited to an electrical connector having one or more wires, a portable computer disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any suitable combinations of the foregoing. In the embodiments of the present disclosure, the computer-readable storage medium may be any tangible medium including or storing a program. The program may be used by or used in combination with an instruction execution system, apparatus, or device. In the embodiments of the present disclosure, a computer-readable signal medium may include a data signal propagated in a baseband or as a portion of a carrier wave, and a computer-readable program code is carried in the data signal. Such a propagated data signal may be in a plurality of forms. The forms include but are not limited to an electromagnetic signal, an optical signal, and any suitable combinations of the foregoing. The computer-readable signal medium can be any computer-readable medium rather than a computer-readable storage medium, and can send, propagate or transmit a program that is used by or in combination with an instruction execution system, apparatus, or device. The program code included in the computer-readable medium may be transmitted by any suitable media, which include but are not limited to a wire, an optical fiber cable, radio frequency (RF), etc., or any suitable combinations of the foregoing.

The computer-readable medium may be included in the server, or may exist alone and not assembled into the server. The computer-readable medium carries one or more programs. The one or more programs, when executed by a server, cause the server to acquire, in response to detecting that a peripheral mode of a terminal is not activated, a frame rate applied to a terminal; determine, in response to the frame rate satisfying a screen-off condition, whether a user is acquiring screen information of the terminal; and control, in response to a determination result that the user does not acquire the screen information of the terminal, a screen to enter an immediate dimming mode.

Computer-readable instruction codes for performing operations in the embodiments of the present disclosure may be written in one or more types of programming languages or their combinations. The programming languages include object-oriented programming languages such as Java, Smalltalk, and C++, and conventional procedural programming languages such as a "C" language or similar programming languages. The program code may be entirely executed on a user computer, may be partially executed on a user computer, may be executed as an independent software package, may be partially executed on a user computer and partially executed on a remote computer, or may be entirely executed on a remote computer or server. In a case where the remote computer is involved, the remote computer may be connected to the user computer by any types of networks, which include a local area network (LAN) or a wide area network (WAN), or may be connected to an external computer (for instance, by an internet service provider by the internet).

The embodiments in the description are all described in a progressive manner, reference may be made to each other for the same or similar parts of the embodiments, and each embodiment focuses on descriptions of differences from other embodiments. Particularly, the system or system embodiment is basically similar to the method embodiment and thus is described simply, and for related parts, reference may be made to parts of the descriptions of the method embodiment. The system or system embodiment described above is merely schematic, where the unit described as a separate component may be physically separated or not, and a component displayed as a unit may be a physical unit or not. That is, the component may be located at one place, or distributed on a plurality of network units. Some or all of the modules may be selected according to an actual requirement to achieve the objective of the solution of the embodiment. Those of ordinary skill in the art can have an understanding and perform implementation without making creative efforts.

The technical solutions provided in the present disclosure is described in detail above. Specific instances are used herein for illustration of principles and embodiments of the present disclosure. The descriptions of the above embodiments are merely used for assisting in understanding the method of the present disclosure and its core ideas. Moreover, those of ordinary skill in the art can make modifications in terms of particular embodiments and the scope of application in accordance with the ideas of the present disclosure. In conclusion, the content of the description should not be construed as a limitation on the present disclosure.

The above embodiments are merely preferred embodiments of the present disclosure, and not intended to limit the present disclosure. Any modifications, equivalent substitutions, improvements, etc. made within the spirit and principles of the present disclosure should all fall within the scope of protection of the present disclosure.

## Claims

1. A system for configuring a bandwidth for a network interface card, comprising:
a first processor, a second processor, a network interface card connector, a first connector, a second connector, a third connector, and an input or output expander; wherein
the first processor is provided with a first bus port, and the first bus port is provided with at least one first low-numbered port and at least one first high-numbered port;
the second processor is provided with a second bus port, and the second bus port is provided with at least one second low-numbered port;
the at least one first low-numbered port is connected to the network interface card connector, the at least one first high-numbered port is connected to the second connector, the first connector is connected to the network interface card connector and the input or output expander, the input or output expander is connected to the first processor, and the at least one second low-numbered port is connected to the third connector; and
the system for configuring the bandwidth for the network interface card is configured as follows: in response to the first connector being disconnected from the second connector and disconnected from the third connector, the system for configuring the bandwidth for the network interface card is adapted to a first bandwidth;
in response to the first connector being connected to the second connector and disconnected from the third connector, the system for configuring the bandwidth for the network interface card is adapted to a second bandwidth; and
in response to the first connector being disconnected from the second connector and connected to the third connector, the system for configuring the bandwidth for the network interface card is adapted to two first bandwidths.

2. The system for configuring the bandwidth for the network interface card as claimed in claim 1, wherein the first connector is provided with a first address port and a first presence port, the second connector is provided with a second address port and a second presence port, and the third connector is provided with a third presence port; and
the first address port is connected to the input or output expander, and the first presence port is connected to the input or output expander.

3. The system for configuring the bandwidth for the network interface card as claimed in claim 2, further comprising a first resistor and a second resistor; wherein
one end of the first resistor is electrically connected to the first address port, and the other end of the first resistor is connected to a first power source;
one end of the second resistor is electrically connected to the first presence port, and the other end of the second resistor is connected to the first power source;
the second address port and the second presence port are grounded; and
the third presence port is grounded.

4. The system for configuring the bandwidth for the network interface card as claimed in claim 1, further comprising a controller; wherein
the controller is provided with a first power supply port, a second power supply port, and a power supply indicator port; and
the first power supply port, the second power supply port, and the power supply indicator port are all connected to the network interface card connector.

5. The system for configuring the bandwidth for the network interface card as claimed in claim 4, further comprising a first electronic fuse and a second electronic fuse; wherein
the network interface card connector is further provided with a first power source port and a second power source port;
one end of the first electronic fuse is electrically connected to the first power source port, and the other end of the first electronic fuse is connected to a first power source; and
one end of the second electronic fuse is electrically connected to the second power source port, and the other end of the second electronic fuse is connected to a second power source.

6. The system for configuring the bandwidth for the network interface card as claimed in claim 5, wherein the controller is further provided with a first electronic fuse enable port and a second electronic fuse enable port;
the first electronic fuse enable port is connected to the first electronic fuse and configured to control turn-on or turn-off of the first electronic fuse; and
the second electronic fuse enable port is connected to the second electronic fuse and configured to control turn-on or turn-off of the second electronic fuse.

7. The system for configuring the bandwidth for the network interface card as claimed in claim 4, further comprising a first buffer, a second buffer, and an AND gate; wherein
the first buffer is connected to the controller and the network interface card connector; and
the second buffer is connected to the network interface card connector and an input end of the AND gate, and an output end of the AND gate is electrically connected to the controller.

8. The system for configuring the bandwidth for the network interface card as claimed in claim 4, wherein the controller is further provided with a first virtual address port and a second virtual address port;
the first virtual address port is connected to the first processor; and
the second virtual address port is connected to the second processor.

9. The system for configuring the bandwidth for the network interface card as claimed in claim 4, wherein the controller is further provided with a hot plug signal port, a first indicator port, and a second indicator port;
the system for configuring the bandwidth for the network interface card further comprises a hot plug trigger, a first indicator light, and a second indicator light;
the hot plug trigger is electrically connected to the hot plug signal port;
the first indicator light is electrically connected to the first indicator port; and
the second indicator light is electrically connected to the second indicator port.

10. The system for configuring the bandwidth for the network interface card as claimed in claim 4, wherein the network interface card connector is further provided with at least one bandwidth allocation port; and
the at least one bandwidth allocation port is grounded.

11. The system for configuring the bandwidth for the network interface card as claimed in any one of claims 1 to 10, further comprising a fourth connector; wherein
the second processor is further provided with at least one second high-numbered port; and
the at least one second high-numbered port is connected to the fourth connector.

12. A method for configuring a bandwidth for a network interface card, applied to the system for configuring the bandwidth for the network interface card as claimed in any one of claims 1 to 11, comprising:
acquiring a first signal and a second signal in response to the first connector completing a connection setting, wherein the first signal and the second signal are configured to indicate connection status of the first connector;
determining the connection status of the first connector according to the first signal and the second signal; and
configuring, according to the connection status of the first connector, an adaptive bandwidth of the system for configuring the bandwidth for the network interface card.

13. The method for configuring the bandwidth for the network interface card as claimed in claim 12, wherein the connection status comprises status as follows: the first connector is disconnected from the second connector and disconnected from the third connector, or the first connector is connected to the second connector and disconnected from the third connector, or the first connector is disconnected from the second connector and connected to the third connector; and
the configuring, according to the connection status of the first connector, the adaptive bandwidth of the system for configuring the bandwidth for the network interface card comprises:
configuring, in response to the first connector being disconnected from the second connector and disconnected from the third connector, the system for configuring the bandwidth for the network interface card to be adapted to a first bandwidth;
configuring, in response to the first connector being connected to the second connector and disconnected from the third connector, the system for configuring the bandwidth for the network interface card to be adapted to a second bandwidth; and
configuring, in response to the first connector being disconnected from the second connector and connected to the third connector, the system for configuring the bandwidth for the network interface card to be adapted to two first bandwidths.

14. The method for configuring the bandwidth for the network interface card as claimed in claim 12, wherein the system for configuring the bandwidth for the network interface card further comprises a hot plug trigger, and the hot plug trigger is triggered to generate a hot plug signal; and the method further comprises:
controlling, in response to detecting that the network interface card is present, a first power source and a second power source to be powered on; and
configuring, in response to receiving the hot plug signal, a bandwidth corresponding to the network interface card according to the first signal and the second signal.

15. The method for configuring the bandwidth for the network interface card as claimed in claim 14, wherein after the configuring the bandwidth corresponding to the network interface card according to the first signal and the second signal, the method further comprises:
enabling the network interface card, and controlling a second indicator light to blink until the network interface card is completely enabled; and
controlling the second indicator light to be steady on to indicate that the network interface card normally functions.

16. The method for configuring the bandwidth for the network interface card as claimed in claim 12, further comprising:
controlling, in response to the system for configuring the bandwidth for the network interface card being connected to the network interface card and acquiring a hot plug signal, the network interface card to be powered off; and
removing, in response to the network interface card completely powered off, the network interface card, and controlling a first power source and a second power source to be powered off.

17. The method for configuring the bandwidth for the network interface card as claimed in claim 16, wherein the controlling the network interface card to be powered off comprises:
controlling a first power supply port and a second power supply port to be powered off;
controlling a second indicator light to blink until the first power supply port and the second power supply port are completely powered off; and
turning off, in response to the first power supply port and the second power supply port completely powered off, the second indicator light, to indicate that the network interface card is removed.

18. A computer device, comprising a memory, a processor, and a network interface card bandwidth configuration program stored in the memory and capable of being run on the processor, wherein the processor, when executing the network interface card bandwidth configuration program, implements the method for configuring the bandwidth for the network interface card as claimed in any one of claims 12 to 17.

19. A non-transitory computer-readable storage medium, storing a network interface card bandwidth configuration program, wherein the network interface card bandwidth configuration program, when executed by a processor, implements the method for configuring the bandwidth for the network interface card as claimed in any one of claims 12 to 17.

20. A computer-readable instruction product, comprising computer-readable instructions, wherein the computer-readable instructions, when executed by a processor, implements the method for configuring the bandwidth for the network interface card as claimed in any one of claims 12 to 17.
